# DEMANDE DE BREVET EUROPEEN

(11) **EP 3 438 865 A1**
(43) Date de publication de la demande: **06.02.2019**
(21) Numéro de dépôt: 17306031.0
(22) Date de dépôt: 02.08.2017
(51) Int. Cl.: G06F 21/55, G06F 21/14, G06F 9/30

(54) **DÉTECTION D'ATTAQUE PAR COMPTAGE D'INSTRUCTION DE BRANCHEMENT**

(71) Demandeur: Texplained, 06560 Valbonne (FR)
(72) Inventeur: THOMAS, Olivier, 06530 LE TIGNET (FR)
(74) Mandataire: Hautier, Nicolas

(57) **Abrégé**

L'invention concerne un dispositif de détection d'attaque et de contre-mesure comprenant un registre d'instruction, ledit registre comprenant au moins une entrée, au moins une bascule configurée pour générer au moins au niveau d'une sortie un signal à contrôler portant au moins partiellement une instruction. Avantageusement, le dispositif comprend en outre au moins un circuit de contrôle d'activité configuré pour contrôler ledit signal de façon à surveiller un taux d'occurrence d'instructions de branchement. Selon une possibilité, le circuit de contrôle d'activité 3 comprend un compteur d'activité 30 configuré pour compter un nombre de cycles d'horloge sans instruction de branchement. Si ledit nombre dépasse un seuil, le circuit de contrôle d'activité 3 peut générer un signal de non activité et déclencher une contre-mesure.

## Description

### DOMAINE DE L'INVENTION

Cette invention concerne le domaine de la sécurité microélectronique. Cette invention concerne en particulier un dispositif de détection d'une attaque sur un circuit intégré. Elle trouve pour applications particulièrement avantageuses la détection des attaques sur un circuit intégré logé dans une puce. Cette invention concerne également une méthode de détection d'une telle attaque.

### ARRIERE-PLAN TECHNOLOGIQUE

Dans le domaine de la sécurité microélectronique, la sécurité des données peut en partie résulter d'éléments matériels intégrés dans un circuit intégré, et/ou d'éléments logiciels tels que des clés de chiffrement.

Face à ces différents niveaux de protection d'un circuit intégré ou plus généralement d'une puce, la technicité des attaques augmente.

En particulier, le recours à des analyses physiques poussées des circuits intégrés par le biais d'équipements très sensibles augmente.

Par exemple, la possibilité de mesurer des courants de très faible intensité a permis de développer des méthodes d'analyse de puissance différentielle (DPA pour l'acronyme anglais Differential Power Analysis) de manière à décrypter certaines couches logicielles embarquées dans les circuits intégrés.

D'autres méthodes d'analyse physique invasives, comprenant par exemple une modification de circuit par faisceau d'ions focalisés (FIB pour l'acronyme anglais Focused Ion Beam), permettent de modifier physiquement le circuit de manière à extraire des données efficacement.

Une méthodologie efficace d'extraction de données est l'extraction de code linéaire (LCE pour l'acronyme anglais Linear Code Extraction) qui vise à forcer une lecture linéaire des instructions adressées à une unité centrale de traitement.

Cette extraction peut ainsi permettre d'accéder aux données stockées dans les mémoires par exemple.

Les données stockées dans les mémoires sont cependant cryptées et ne sont pas exploitables directement. L'intérêt d'une telle attaque est d'accéder directement au contenu décrypté.

Cette extraction peut par exemple se faire au niveau d'un bus de données décryptées en amont d'un registre d'instructions, ou directement au niveau dudit registre d'instructions. Les données transitant sur le registre d'instructions sont en effet nécessairement décryptées de façon à être interprétables par l'unité centrale de traitement.

En outre, le registre d'instructions est contrôlé par des signaux qui peuvent être directement utilisés par un attaquant pour mener une attaque de type LCE.

Par conséquent, une telle attaque par LCE intervenant directement sur un registre d'instructions permet d'accéder directement aux données sensibles du circuit intégré.

Le registre d'instruction constitue donc une cible privilégiée pour une attaque.

Un inconvénient de certains dispositifs de protection amont, au niveau des mémoires non volatiles par exemple, est qu'ils ne protègent pas directement le registre d'instruction. Ils peuvent être contournés par exemple.

Cependant, au regard des méthodes d'analyse physiques évoquées plus haut, le registre d'instruction apparaît vulnérable quels que soient les dispositifs de protection matériels et logiciels envisagés.

Un dispositif alternatif et complémentaire aux dispositifs de protection est un dispositif de détection d'attaque.

Un tel dispositif de détection d'attaque permet de détecter une attaque en cours sur le circuit intégré, et de lancer au moins une contre-mesure de manière à dérouter l'attaque ou à la stopper.

Le document WO 2007/055729 divulgue par exemple un dispositif de détection d'attaque dédié à une application logicielle et matérielle, le dispositif étant sensible aux performances de l'application. Ce document divulgue en particulier un dispositif analysant les performances de l'application par le biais d'un circuit d'indicateurs de performances. Si, lors d'une exécution de l'application dans un mode de test alimenté par ce circuit, les indicateurs de performance atteignent des valeurs limites prédéterminées, alors le dispositif active un code de protection logiciel.

Un inconvénient d'un tel dispositif est que les performances du logiciel ne peuvent pas être surveillées en continu par le dispositif sans les altérer. Le logiciel doit en effet être exécuté périodiquement en mode de test pour surveiller ses performances.

En outre, une attaque de type LCE implique une prise de contrôle de l'exécution du logiciel. La détection d'une telle attaque devient dès lors compromise.

L'invention vise à pallier les inconvénients des dispositifs de détection et de protection cités.

Un but de l'invention est de proposer en particulier un dispositif de détection d'attaque au niveau d'un registre d'instruction qui n'altère pas le fonctionnement de ce registre ni les performances d'un programme exécuté par ce registre.

D'autres buts, caractéristiques et avantages de la présente invention apparaîtront à l'examen de la description suivante et des dessins d'accompagnement.

### RESUME DE L'INVENTION

Un premier aspect de l'invention concerne un dispositif de détection d'attaque d'un microprocesseur comprenant au moins un registre d'instructions destiné à stocker au moins temporairement au moins une partie d'instruction de l'une au moins parmi une instruction séquentielle et une instruction de branchement, ledit registre comprenant au moins une pluralité de bascules, chaque bascule étant configurée entre une entrée de données et une sortie de données pour générer, au niveau de la sortie de données associée, un premier signal, chaque premier signal portant au moins une partie d'instruction.

Avantageusement, le dispositif comprend en outre au moins un circuit de contrôle d'activité, chaque circuit de contrôle d'activité étant associé à au moins une bascule du registre d'instructions et étant configuré pour :
- surveiller un deuxième signal issu d'au moins un premier signal généré par une bascule associée audit circuit de contrôle d'activité et prise parmi ladite au moins une bascule, de façon à mesurer un taux d'occurrence d'une partie d'instruction de branchement portée par le deuxième signal et issue dudit au moins un premier signal, et
- générer, si le taux d'occurrence mesuré est inférieur à une première valeur seuil prédéterminée, un signal de non activité pour détecter une attaque.

Lors d'une attaque de type LCE, les instructions du programme sont forcées à être exécutées séquentiellement. Les instructions deviennent en grande majorité séquentielles. Le nombre d'instructions de branchement exécutées diminue donc très fortement. En surveillant le nombre d'instructions de branchement exécutées, il est donc possible de détecter une attaque de type LCE en cours.

Ainsi, l'invention propose une solution permettant un contrôle passif et continu des instructions de branchement exécutées sur un registre d'instructions, et permet avantageusement de détecter *in fine* une attaque de type LCE.

En outre, le dispositif est de préférence uniquement matériel et peut détecter, de façon autonome et de manière avantageuse sans recours à une partie logicielle, une attaque de type LCE.

Le dispositif de détection d'attaque selon un premier aspect de l'invention permet ainsi de surveiller un fonctionnement normal du registre d'instructions sans altérer les performances du circuit intégré.

Il requiert en outre peu d'énergie pour réaliser la surveillance et la détection, et se base sur des circuits très limités en taille et donc parfaitement intégrables dans le circuit intégré.

En surveillant l'exécution d'instructions de branchement directement au niveau du registre d'instructions et de façon purement matérielle, le dispositif de détection d'attaque selon l'invention est par ailleurs difficilement contournable.

En effet, de nombreuses modifications du circuit (impliquant des techniques d'ingénierie inverse connues sous l'appellation anglaise *reverse engineering*) sont nécessaires pour contourner ce dispositif de détection d'attaque. Cela réduit considérablement le nombre d'attaques potentiellement réussies.

Chaque instruction issue du registre d'instructions est codée en bits et comprend au moins un bit et plus généralement quelques bits dédiés à l'identification du type d'instruction auquel elle appartient. Ces quelques bits renseignent donc sur le caractère séquentiel ou de branchement de l'instruction. Ils forment une séquence d'identification d'instruction. Cette séquence peut être réduite au seul bit codant pour l'identification du type d'instruction, le cas échéant.

L'au moins un premier signal généré en sortie de l'au moins une bascule associée lors d'une exécution d'une instruction du registre, et/ou le deuxième signal, dénommés signal à contrôler, premier signal à contrôler ou deuxième signal à contrôler, comprennent avantageusement ladite séquence d'identification d'instruction.

Le signal à contrôler peut être une partie d'une instruction et peut comprendre avantageusement la seule séquence d'identification de ladite instruction.

Selon un mode de réalisation avantageux, le circuit de contrôle d'activité comprend un compteur d'activité configuré pour compter un nombre de séquences d'identification d'instruction de branchement.

Il est en outre plus significatif de compter les instructions de branchement exécutées sur un intervalle de temps donné.

Selon un mode de réalisation privilégié et particulièrement avantageux, le circuit de contrôle d'activité comprend le compteur d'activité et un compteur temporel configuré pour compter un nombre de cycles d'horloge par exemple. Le circuit de contrôle d'activité peut en outre comprendre un circuit analogique qui va intégrer le nombre d'occurrences d'instructions de branchement dans un intervalle de temps donné.

Alternativement, le circuit de contrôle d'activité peut être configuré de manière à compter un nombre de cycles d'horloge sans occurrence d'instruction de branchement.

Selon une possibilité, ce nombre de cycles d'horloge sans occurrence d'instruction de branchement peut être comparé, via un module de comparaison par exemple, à un nombre maximal de cycles d'horloge sans occurrence d'instruction de branchement.

De manière avantageuse à l'issue de la comparaison, le circuit de contrôle d'activité peut soit générer un signal d'activité et réinitialiser le comptage de manière à poursuivre le contrôle du signal à contrôler, soit générer un signal de non activité de manière à déclencher une contre-mesure.

Un deuxième aspect de l'invention concerne un procédé de détection d'attaque d'un microprocesseur comprenant une séquence d'étapes de détection d'instructions de branchement et une séquence d'étapes de décision d'activité mises en oeuvre par au moins un circuit de contrôle d'activité, chaque circuit de contrôle d'activité étant associé à au moins une bascule, telles que :
La séquence d'étapes de détection d'instructions de branchement comprend au moins les étapes suivantes :
   - surveiller un deuxième signal issu d'au moins un premier signal généré par une bascule associée audit circuit de contrôle d'activité et prise parmi ladite au moins une bascule, et
   - détecter au moins une partie d'instruction de branchement portée par le deuxième signal et issue dudit au moins un premier signal, et
   - mesurer un taux d'occurrence d'une partie d'instruction de branchement portée par le deuxième signal et issue dudit au moins un premier signal.

La séquence d'étapes de décision d'activité comprend au moins les étapes suivantes :
- comparer le taux d'occurrence mesuré à une première valeur seuil prédéterminée, et
- générer, si le taux d'occurrence mesuré est inférieur à la première valeur seuil, un signal de non activité pour détecter une attaque.

Un troisième aspect de l'invention concerne un dispositif de sécurité microélectronique comprenant le dispositif de détection d'attaque d'un microprocesseur selon le premier aspect de l'invention.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- la figure 1 illustre un diagramme de fonctionnement d'un registre d'instruction selon l'art antérieur ;
- la figure 2 illustre un diagramme d'étapes d'un procédé de détection d'attaque d'un microprocesseur selon l'invention ;
- la figure 3a montre un premier mode de réalisation d'un dispositif de détection d'attaque selon l'invention ;
- la figure 3b montre un deuxième mode de réalisation d'un dispositif de détection d'attaque selon l'invention ;
- la figure 3c montre un troisième mode de réalisation d'un dispositif de détection d'attaque selon l'invention ;
- la figure 3d montre un quatrième mode de réalisation d'un dispositif de détection d'attaque selon l'invention ;
- la figure 4a montre un premier mode de réalisation d'un circuit de contrôle d'activité d'un dispositif de détection d'attaque selon l'invention ;
- la figure 4b montre un deuxième mode de réalisation d'un circuit de contrôle d'activité d'un dispositif de détection d'attaque selon l'invention ;
- la figure 5a montre un premier mode de réalisation d'un compteur d'un dispositif de détection d'attaque selon l'invention ;
- la figure 5b montre un graphique illustrant le fonctionnement du compteur illustré à la figure 5a ;
- la figure 6a montre un deuxième mode de réalisation d'un compteur d'un dispositif de détection d'attaque selon l'invention ;
- la figure 6b montre un graphique illustrant le fonctionnement du compteur illustré à la figure 6a ;
- la figure 7 montre un troisième mode de réalisation d'un compteur d'un dispositif de détection d'attaque selon l'invention.

### DESCRIPTION DETAILLEE

L'invention selon son premier aspect comprend notamment les caractéristiques optionnelles ci-après pouvant être utilisées en association ou alternativement :
- chaque circuit de contrôle d'activité est en outre configuré pour générer, si le taux d'occurrence mesuré est supérieur à une deuxième valeur seuil prédéterminée, éventuellement égale à la première valeur seuil prédéterminée, un signal d'activité signifiant qu'aucune attaque n'est détectée.
- la partie d'instruction de branchement comprend une séquence d'identification d'instruction de branchement.
- la séquence d'identification d'instruction de branchement comprend au moins deux bits.
- le circuit de contrôle d'activité comprend un compteur temporel configuré pour compter un nombre de cycles d'horloge à partir d'un signal d'horloge et un compteur d'activité configuré pour compter un nombre d'instruction de branchement à partir du deuxième signal.
- le circuit de contrôle d'activité comprend un compteur d'activité configuré pour recevoir un signal d'horloge et pour compter un nombre de parties d'instruction de branchement pour un nombre de deuxième signal reçu, ledit nombre de deuxième signal reçu correspondant à un nombre prédéterminé de cycles d'horloge issus du signal d'horloge.
- le circuit de contrôle d'activité comprend au moins deux compteurs d'activité dont un premier compteur d'activité configuré pour compter un nombre de parties d'instruction de branchement et un deuxième compteur d'activité configuré pour compter un nombre de parties d'instruction séquentielle.
- le circuit de contrôle d'activité comprend au moins un module de comparaison configuré, en sortie de l'un au moins parmi un compteur temporel et un compteur d'activité, pour comparer le taux d'occurrence mesuré à une valeur seuil prédéterminée.
- le circuit de contrôle d'activité comprend au moins l'un parmi un compteur temporel et un compteur d'activité, et est configuré pour réinitialiser au moins l'un parmi le compteur temporel et le compteur d'activité lorsqu'une partie d'instruction de branchement est détectée.
- le dispositif de détection d'attaque d'un microprocesseur comprend en outre au moins un circuit logique, chaque circuit logique étant associé à au moins deux bascules et étant agencé entre au moins deux sorties de données correspondantes et un circuit de contrôle d'activité également associé auxdites aux moins deux bascules pour recevoir au moins deux premiers signaux, et chaque circuit logique étant configuré pour combiner des parties d'instruction, et notamment des parties d'instruction de branchement, issues d'au moins deux premiers signaux parmi lesdits au moins deux premiers signaux pour générer au moins un deuxième signal, la combinaison d'au moins deux premiers signaux comprenant par exemple une sommation de ces signaux.
- le dispositif de détection d'attaque d'un microprocesseur comprend en outre un circuit de décision associé à au moins deux circuits de contrôle d'activité et configuré, en sortie desdits au moins deux circuits de contrôle d'activité, pour déterminer, en fonction d'au moins deux signaux parmi les signaux de non-activité ou d'activité générés par lesdits au moins deux circuits de contrôle d'activité, une occurrence ou une absence d'attaque.
- chaque circuit de contrôle d'activité est en outre configuré pour que le signal de non activité généré porte l'une parmi une contre-mesure et une instruction de déclenchement d'une contre-mesure, de manière à parer une attaque détectée, ladite attaque étant par exemple une attaque par extraction de code linéaire.
- le circuit de contrôle d'activité présente une très basse consommation d'énergie.

L'invention selon son deuxième aspect comprend notamment les caractéristiques optionnelles ci-après pouvant être utilisées en association ou alternativement :
- la séquence d'étapes de décision d'activité comprend en outre les étapes suivantes :
   ∘ générer, si le taux d'occurrence mesuré est supérieur à une deuxième valeur seuil prédéterminée, un signal d'activité signifiant qu'aucune attaque n'est détectée,
   ∘ après la génération du signal de non activité, déclencher une contre-mesure,
   ∘ après la génération du signal d'activité, réinitialiser la mesure du taux d'occurrence.
- le procédé de détection d'attaque d'un microprocesseur comprend en outre, après l'étape de décision consistant à déclencher la contre-mesure, au moins une étape de contre-mesure parmi :
   ∘ modifier un contenu d'un registre d'adresse afin d'isoler le registre d'instruction d'une mémoire à protéger
   ∘ générer un flot de données aléatoire pour brouiller des données extraites par extraction de code linéaire.
   ∘ altérer le fonctionnement du circuit de façon à le rendre inexploitable.

Dans la suite, un processeur est une unité de traitement séquentielle qui exécute un ensemble d'instructions en effectuant celles-ci les unes après les autres.

En particulier, le processeur comprend des circuits logiques généralement basés sur une combinaison de transistors.

Un circuit logique peut être configuré pour fonctionner selon une logique combinatoire, comprenant des fonctions élémentaires de type booléen.

Il peut être configuré pour fonctionner selon une logique séquentielle, résultant de l'association de plusieurs fonctions logiques combinatoires.

Une porte logique est un circuit logique fonctionnant selon une logique combinatoire.

Une bascule est un circuit logique fonctionnant selon une logique séquentielle.

Un registre est un emplacement de mémoire au sein du processeur. Le registre est généralement une mémoire interne très réduite et très rapide.

Un registre d'instruction est un registre spécialisé délivrant des instructions à une unité de traitement.

En particulier, le registre d'instruction est configuré pour stocker des données d'entrée, généralement sous forme de bits, de manière à rassembler lesdites données avant de les délivrer de manière synchronisée en fonction d'un signal de synchronisation. Ces données synchronisées en sortie du registre d'instruction forment une instruction généralement codée en format binaire.

A cet effet, le registre d'instruction comprend notamment une pluralité de bascules, lesdites bascules pouvant être au nombre de huit, seize, trente-deux ou soixante-quatre par exemple, selon un encodage choisi.

Le signal de synchronisation peut être un signal d'horloge, comprenant alors des cycles d'horloge, ou un signal de lecture, également dénommé signal « read » selon une dénomination anglo-saxonne. Dans la suite, le signal d'horloge s'entend plus généralement du signal de synchronisation et peut s'entendre d'un signal « read ».

Une instruction désigne une étape dans un programme informatique. Une instruction dicte au processeur une action qu'il doit effectuer avant de passer à l'instruction suivante. Le programme informatique est constitué d'une suite d'instructions.

Un registre d'adresse est un registre spécialisé indiquant l'emplacement ou l'adresse mémoire de la prochaine instruction à être exécutée. Une fois l'instruction chargée, il peut être automatiquement incrémenté pour pointer sur l'instruction suivante.

Une instruction de branchement permet de choisir une autre adresse pour influer sur le déroulement du programme informatique.

En particulier, l'instruction de branchement est une opération consistant à se déplacer au sein du programme exécuté par le processeur, en pointant sur une adresse identifiée au lieu de poursuivre l'exécution du programme séquentiellement.

Elle peut également être appelée instruction de saut ou de déroutement.

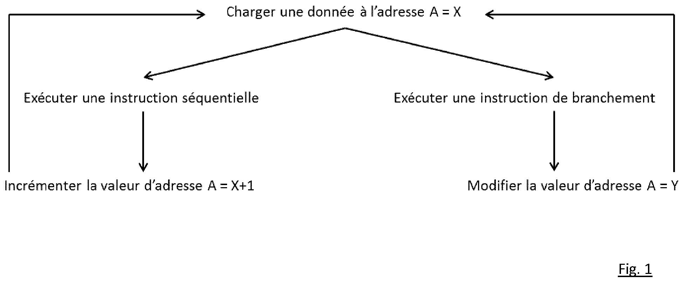

La figure 1 illustre un fonctionnement d'un registre d'instruction selon l'art antérieur. Des instructions sont exécutées successivement, lesdites instructions comprenant des instructions séquentielles, incrémentant linéairement une adresse A = X+1 pour passer à l'instruction suivante, et des instructions de branchement, modifiant l'adresse A = Y pour atteindre une instruction particulière.

Dans la suite, une instruction est divisée en parties d'instruction. Au moins l'une de ces parties comprenant au moins un bit code pour un type d'instruction. Le type d'instruction peut être « de branchement » ou « séquentielle ». Dès lors, ladite partie d'instruction codant pour le type d'instruction permet d'identifier si l'instruction complète est une instruction de branchement ou une instruction séquentielle.

Cette partie codant pour le type d'instruction est dénommée séquence d'identification d'instruction. Elle comprend un sous-ensemble de bits, éventuellement réduit à un bit, d'une instruction stockée à un instant t dans la pluralité de bascules.

Dans la suite, une instruction de branchement peut être détectée par une séquence d'identification d'instruction de branchement associée à ladite instruction de branchement.

Dès lors, un taux d'occurrence d'instructions de branchement peut être défini dans un premier cas comme étant le rapport d'un nombre de séquences d'identification d'instructions de branchement sur un nombre de séquences d'identification d'instructions global. Dans un deuxième cas, le taux d'occurrence peut également s'entendre d'un nombre de séquences d'identification d'instructions de branchement rapporté à un nombre de signaux de synchronisation, de préférence successifs.

Ce taux d'occurrence peut être mesuré dans le premier cas par un compteur, ou dans le deuxième cas par un intégrateur. Les termes « compteur » et « intégrateur » sont employés indifféremment dans la suite.

De manière générale, la présente invention concerne un dispositif de détection d'attaque, dénommé également registre d'instruction modifié. Le dispositif de détection d'attaque comprend notamment une modification du registre d'instruction de sorte à contrôler au moins un signal en sortie du registre. Le contrôle peut en particulier porter sur au moins un signal caractérisant en partie au moins une instruction de branchement, afin de déterminer si une attaque de type LCE est en cours. Le cas échéant, le dispositif de détection d'attaque peut avantageusement déclencher au moins une contre-mesure destinée à déjouer cette attaque.

Dans la suite, « contrôler » ou « le contrôle » s'entendent de « surveiller » ou « la surveillance ».

Par ailleurs, le « signal à contrôler » peut être un premier signal directement issu d'une bascule - soit un bit -, ou un deuxième signal issu au moins en partie d'au moins un premier signal, par le biais d'une opération de traitement de signal par exemple.

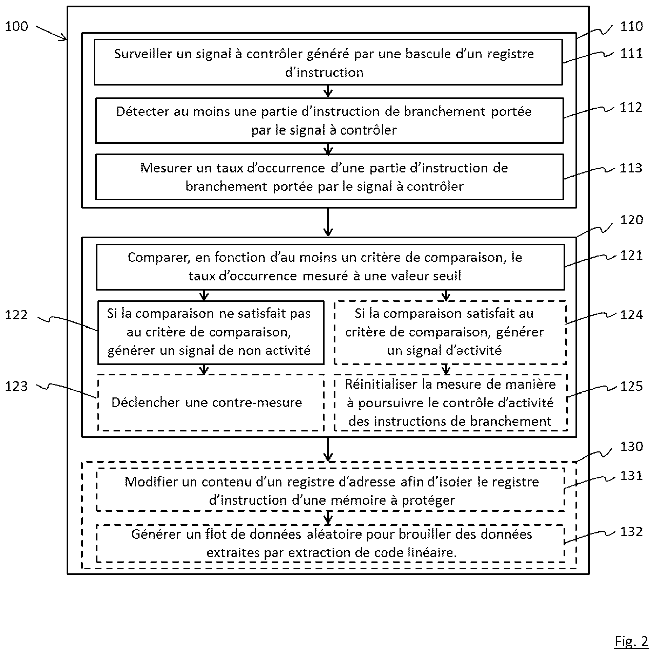

En référence à la figure 2, la présente invention concerne également un procédé 100 de détection d'attaque d'un microprocesseur comprenant au moins une séquence d'étapes de détection d'instructions de branchement 110, de préférence une séquence d'étapes de décision d'activité 120, et de préférence une séquence d'étapes de contre-mesure 130.

La séquence d'étapes de détection d'instructions de branchement 110 peut comprendre les étapes suivantes :
- Détecter 111 au moins un signal associé au moins partiellement à une instruction d'un registre d'instruction 2,
- Identifier 112 ladite instruction via une séquence d'identification d'instruction portée par ledit au moins un signal,
- Mesurer 113 un paramètre pris parmi un taux d'occurrence de séquences d'identification d'instruction de branchement et un nombre de cycles d'horloge sans occurrence d'instruction de branchement, de sorte à contrôler une activité des instructions de branchement.

La séquence d'étapes de décision d'activité 120 peut comprendre les étapes suivantes :
- Comparer 121 en fonction d'au moins un critère de comparaison le paramètre à une valeur seuil 34, 36 prise parmi un taux d'occurrence minimal de séquences d'identification d'instruction de branchement et un nombre maximal de cycles d'horloge sans occurrence d'instruction de branchement,
- Si la comparaison ne satisfait pas au critère de comparaison, par exemple si le taux d'occurrence de séquences d'identification d'instruction de branchement est inférieur au taux d'occurrence minimal de séquences d'identification d'instruction de branchement, ou par exemple si le nombre de cycles d'horloge sans occurrence d'instruction de branchement est supérieur au nombre maximal de cycles d'horloge sans occurrence d'instruction de branchement, générer 122 un signal de non activité de sorte à déclencher 123 une contre-mesure,
- Si la comparaison satisfait au critère de comparaison, par exemple si le taux d'occurrence de séquences d'identification d'instruction de branchement est supérieur ou égal au taux d'occurrence minimal de séquences d'identification d'instruction de branchement, ou par exemple si le nombre de cycles d'horloge sans occurrence d'instruction de branchement est inférieur ou égal au nombre maximal de cycles d'horloge sans occurrence d'instruction de branchement, générer 124 un signal d'activité et réinitialiser 125 la mesure de manière à poursuivre le contrôle d'activité des instructions de branchement.

La séquence d'étapes de contre-mesure 130 peut comprendre l'une au moins des étapes suivantes :
- Modifier 131 une valeur dans le registre d'adresse de façon à ce que la mémoire à protéger ne soit plus accessible.
- Générer 132 un flot de données aléatoire pour brouiller des données extraites par extraction de code linéaire.
- Altérer le fonctionnement du circuit de façon à le rendre inexploitable.

La mise en oeuvre de cette méthode 100 par l'intermédiaire du dispositif de détection d'attaque d'un microprocesseur est présentée dans la suite, au travers de modes de réalisation préférés mais non limitatifs dudit dispositif.

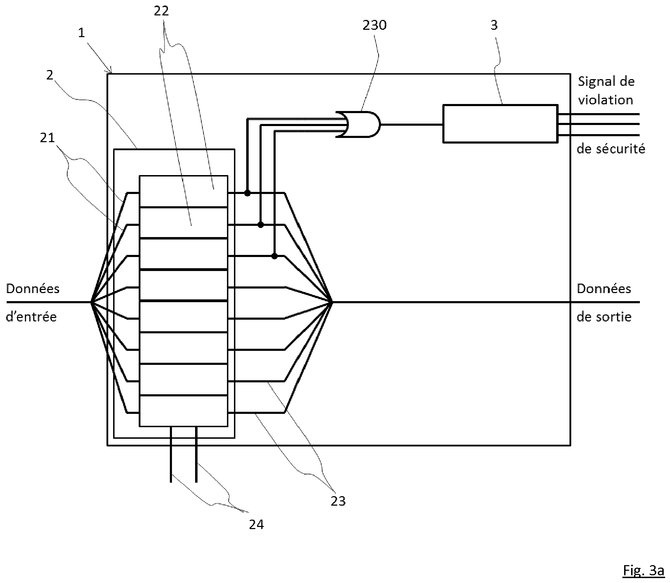

En référence aux figures 3a à 3d, un mode de réalisation préféré d'un dispositif de détection d'attaque 1 selon l'invention comprend un registre d'instruction 2 comprenant au moins une entrée de données 21, de préférence huit ou seize ou trente-deux ou soixante-quatre par exemple, au moins une bascule 22, de préférence huit ou seize ou trente-deux ou soixante-quatre par exemple, et au moins une sortie de données 23, de préférence huit ou seize ou trente-deux ou soixante-quatre par exemple.

Le dispositif de détection d'attaque 1 selon l'invention comprend avantageusement en outre au moins un circuit de contrôle d'activité 3.

Les bascules 22 sont de préférence synchrones. Elles comprennent alors au moins une entrée de contrôle 24 configurée pour recevoir un signal de synchronisation, de préférence un signal d'horloge.

Une bascule 22 transmet en sortie un signal électrique, également appelé signal à contrôler dans la suite.

Ce signal à contrôler est de préférence binaire, c'est-à-dire portant les valeurs logiques « zéro » ou « un ».

Au moins un signal à contrôler est réservé à l'identification du type d'instruction dont il fait partie.

Un ou plusieurs signaux à contrôler issus d'une ou plusieurs bascules 22 associées peuvent dès lors former une séquence d'identification d'instruction.

L'instruction peut être notamment séquentielle ou de branchement, comme illustré à la figure 1.

Le circuit de contrôle d'activité 3 est avantageusement configuré pour surveiller un taux d'occurrence de séquence d'identification d'instruction de branchement.

Pour ce faire, une première possibilité illustrée à la figure 3a peut être de sommer tous les signaux à contrôler ou premiers signaux formant la séquence d'identification d'instruction de branchement en sortie des bascules 22. Une porte logique 230 de type OU par exemple peut permettre de sommer le ou les bits de cette séquence d'identification d'instruction de branchement pour générer un signal « somme ».

Ce signal « somme » ou deuxième signal en sortie de la porte logique 230 peut alors être contrôlé par le circuit de contrôle d'activité 3. Le circuit de contrôle d'activité 3, dont une architecture est détaillée plus loin dans la description, admet en entrée au moins le signal à contrôler et génère 124, 122 en sortie un signal d'activité ou un signal de non-activité à partir du signal à contrôler (le signal « somme » dans ce cas) reçu en entrée.

C'est à partir du signal de non-activité que peut être déclenchée 123 une contre-mesure, soit directement, soit via un signal de violation de sécurité ou par l'intermédiaire d'un module supplémentaire par exemple.

Une telle première configuration peut permettre de détecter facilement un taux d'occurrence d'instructions de branchement anormalement bas.

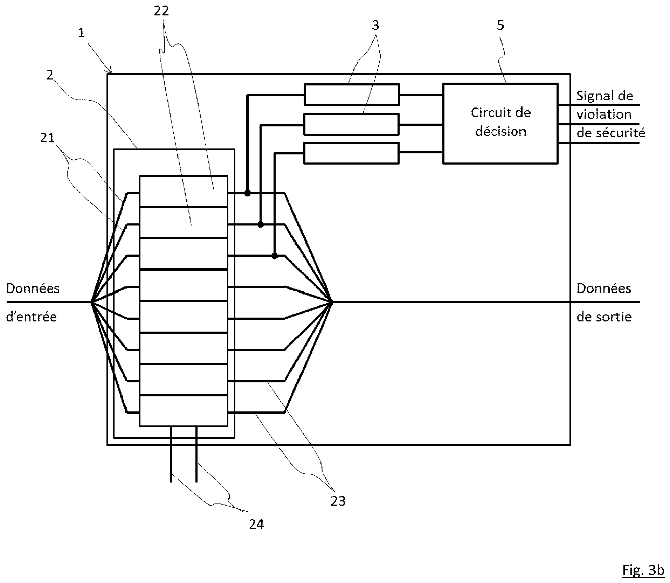

Une deuxième possibilité illustrée à la figure 3b peut être de placer plusieurs circuits de contrôle d'activité 3 en sortie de plusieurs bascules 22. En particulier, un circuit de contrôle d'activité 3 peut être associé à une bascule 22 particulière, et cette association peut être répétée pour un ensemble de bascules 22 particulières affectées à la séquence d'identification d'instruction.

Chaque circuit de contrôle d'activité 3 peut alors être dédié au contrôle individuel d'un signal à contrôler porteur d'un bit, c'est-à-dire d'un premier signal.

Chaque instruction peut ainsi être contrôlée au niveau de chaque bit formant la séquence d'identification d'instruction.

En particulier, chaque instruction de branchement peut ainsi être contrôlée au niveau de chaque bit formant la séquence d'identification d'instruction de branchement, ce qui offre plus de possibilités pour une exploitation de ces mesures en vue de déterminer le taux d'occurrence d'instructions de branchement. Il est ainsi possible de doubler la surveillance par exemple des signaux codant pour le type d'instruction de branchement, si la séquence d'identification d'instruction comprend au moins deux bits par exemple.

Dans ce cas, un circuit de décision 5 peut être placé en sortie des circuits de contrôle d'activité 3, de manière à centraliser les signaux d'activité et de non-activité générés 124, 122 par ceux-ci.

La contre-mesure peut être déclenchée 123 si un seul circuit de contrôle d'activité 3 contrôlant un bit d'une séquence d'identification d'instruction de branchement renvoie un signal de non-activité par exemple.

Alternativement, la contre-mesure peut être déclenchée 123 si une proportion déterminée de signaux de non-activité, correspondant à plusieurs bits de la séquence d'identification d'instruction de branchement, est atteinte par exemple.

Le circuit de décision 5 peut ainsi permettre d'interpréter les différents signaux d'activité et de non-activité envoyés par les différents circuits de contrôle d'activité 3 de manière à déclencher 123 la contre-mesure par le biais du signal de violation de sécurité par exemple.

Une telle deuxième configuration a pour avantage de gérer plusieurs lignes de signaux d'activité ou de non-activité, ce qui complique un potentiel déroutage de ces signaux par une attaque.

En outre, cette deuxième configuration offre plusieurs possibilités de décision, ou différents critères, concernant le déclenchement de la contre-mesure.

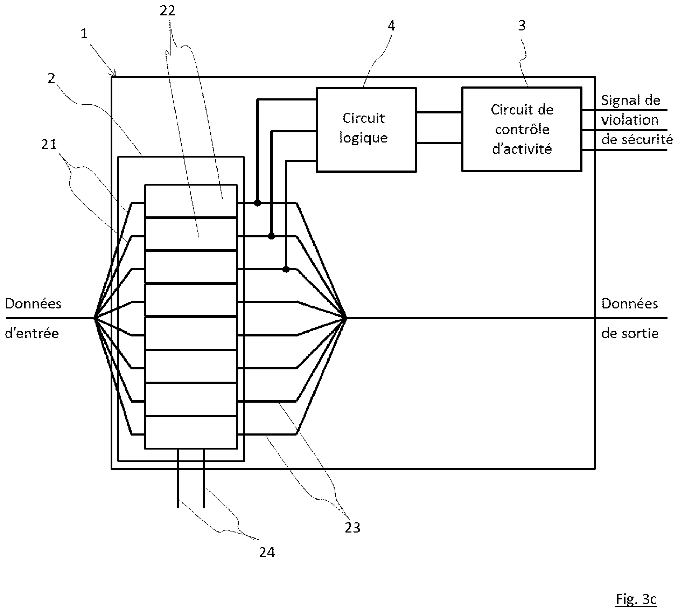

Une troisième possibilité illustrée à la figure 3c peut être d'insérer au moins un circuit logique 4 entre des sorties de données 23 et le ou les circuits de contrôle d'activité 3 de manière à pouvoir combiner certains premiers signaux à contrôler, c'est-à-dire certains bits de séquences d'identification d'instruction, avant d'effectuer la surveillance au niveau d'un deuxième signal issu de ces premiers signaux combinés. Ledit deuxième signal peut ainsi résulter d'une opération de traitement du signal sur plusieurs premiers signaux, avant d'être envoyé en entrée du ou des circuits de contrôle d'activité 3.

Par suite, les signaux d'activité ou de non-activité issus desdits circuits de contrôle d'activité 3 peuvent être relatifs à certaines combinaisons de bits de séquences d'identification d'instructions de branchement.

Une telle troisième configuration peut permettre un contrôle plus pertinent de l'activité du registre d'instruction 2, en ciblant certaines combinaisons de bits particulièrement significatives.

En outre, cette troisième configuration peut en partie s'appuyer sur une architecture de circuit existante. Un décodeur d'instructions par exemple est une partie du circuit dédiée notamment au regroupement de certains bits : ce décodeur peut avantageusement faire office de circuit logique 4. Dans ce cas, cette partie du dispositif 1 est avantageusement délocalisée, c'est-à-dire placée à distance du registre d'instructions. La localisation du dispositif 1 au cours d'une attaque, dans le but de désactiver ou de contourner ledit dispositif 1, est ainsi rendue plus complexe.

Cette troisième configuration permet également de cumuler les avantages des première et deuxième configurations précédentes.

En sommant certains premiers signaux à contrôler au sein d'une séquence d'identification d'instruction de branchement, la détection peut être améliorée, tout en conservant l'avantage d'avoir plusieurs lignes de signaux d'activité ou de non-activité compliquant un déroutage de ces signaux par une attaque.

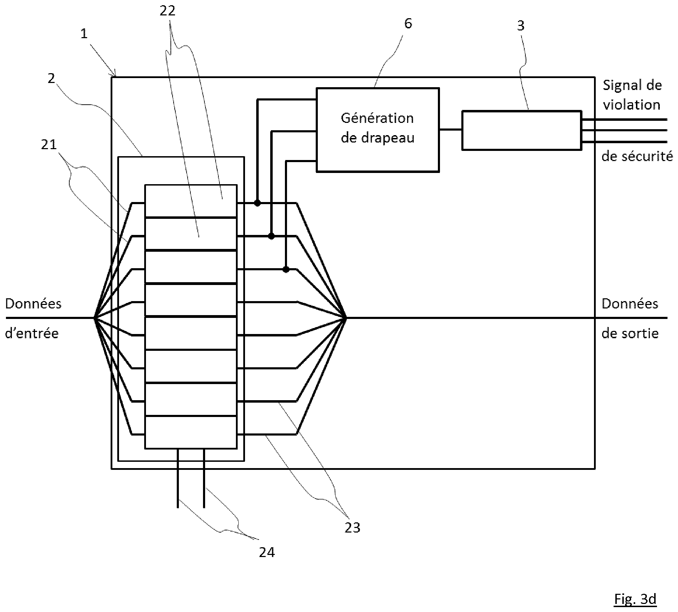

Selon une possibilité illustrée à la figure 3d, le circuit logique peut être un bloc 6 inséré entre les sorties de plusieurs bascules 22 et le circuit de contrôle d'activité 3. Ce bloc 6 peut être configuré pour générer un drapeau d'instruction de branchement, dans le cas où ladite instruction de branchement résulte d'une combinaison de signaux issus desdites plusieurs bascules 22 par exemple.

Ce drapeau peut être un signal codant pour l'identification de l'instruction de branchement recombinée. Il peut ensuite être traité comme un deuxième signal à contrôler par un circuit de contrôle d'activité 3 pour générer 124, 122 un signal d'activité ou de non-activité, lequel peut *in fine* contribuer au déclenchement 123 de la contre-mesure selon les différentes possibilités précédentes.

En référence aux figures 3a et 3b, le circuit de contrôle d'activité 3 peut comprendre une entrée dédiée au signal à contrôler, une entrée dédiée à un signal d'horloge ou de synchronisation, et au moins une sortie dédiée au signal d'activité ou de non activité.

De manière avantageuse, le circuit de contrôle d'activité 3 peut comprendre au moins un compteur d'activité 30 configuré pour compter un nombre d'instructions de branchement en sortie d'au moins une bascule 22 du registre d'instruction 2.

En particulier, le compteur d'activité 30 peut recevoir successivement les signaux à contrôler et compter les seules séquences d'identification d'instruction de branchement portées par ces signaux.

Le circuit de contrôle d'activité 3 peut également comprendre un deuxième compteur d'activité 30 configuré pour compter un nombre d'instructions global, correspondant au nombre d'instructions séquentielles et de branchement.

De préférence, le circuit de contrôle d'activité 3 comprend également un compteur temporel 31 de manière à intégrer un nombre de séquences d'identification d'instruction de branchement sur un intervalle de temps prédéfini.

Le compteur temporel 31 reçoit de préférence un signal d'horloge.

Le signal d'horloge peut être utilisé pour incrémenter le compteur temporel 31. Ledit compteur 31 peut alors compter un nombre de cycles d'horloge correspondant à l'intervalle de temps prédéfini.

De manière générale, le compteur temporel 31 peut être partagé par plusieurs compteurs d'activité 30. Il peut également être dupliqué pour contrôler différents signaux à contrôler sur différents intervalles de temps.

Le circuit de contrôle d'activité 3 peut dès lors évaluer un taux d'occurrence d'instructions de branchement.

Le taux d'occurrence d'instructions de branchement peut être défini comme étant le rapport du nombre d'instructions de branchement sur le nombre d'instructions global, de préférence par intervalle de temps, ou comme étant le rapport du nombre d'instructions de branchement sur un nombre de cycle d'horloge par exemple.

En particulier, le compteur d'activité 30 et le compteur temporel 31 peuvent coopérer de manière à compter un nombre d'instructions de branchement sur un intervalle de temps ou pour un nombre de cycles d'horloge donné.

Selon une possibilité, le taux d'occurrence d'instructions de branchement est comparé 121 à un seuil 34, correspondant à un taux d'occurrence minimal ou à un nombre minimal d'instructions de branchement sur une période temporelle donnée par exemple.

La comparaison peut être effectuée par un module de comparaison 33.

Si le taux d'occurrence d'instructions de branchement est inférieur au taux d'occurrence minimal, un signal de non-activité peut être émis par le circuit de contrôle d'activité 3. Un signal de violation de sécurité pourra être déclenché par la suite.

Si le taux d'occurrence d'instructions de branchement est supérieur au taux d'occurrence minimal 34, un signal d'activité peut être émis par le circuit de contrôle d'activité 3. Dans ce cas, l'au moins un compteur d'activité 30 et/ou le compteur temporel 31 peuvent être réinitialisés ou remis à zéro pour effectuer un nouveau comptage sur une période temporelle suivante.

Le taux d'occurrence minimal 34 peut être un paramètre matériel, par exemple un code fixe programmé en dur, ou un paramètre logiciel défini par exemple dans un registre dédié.

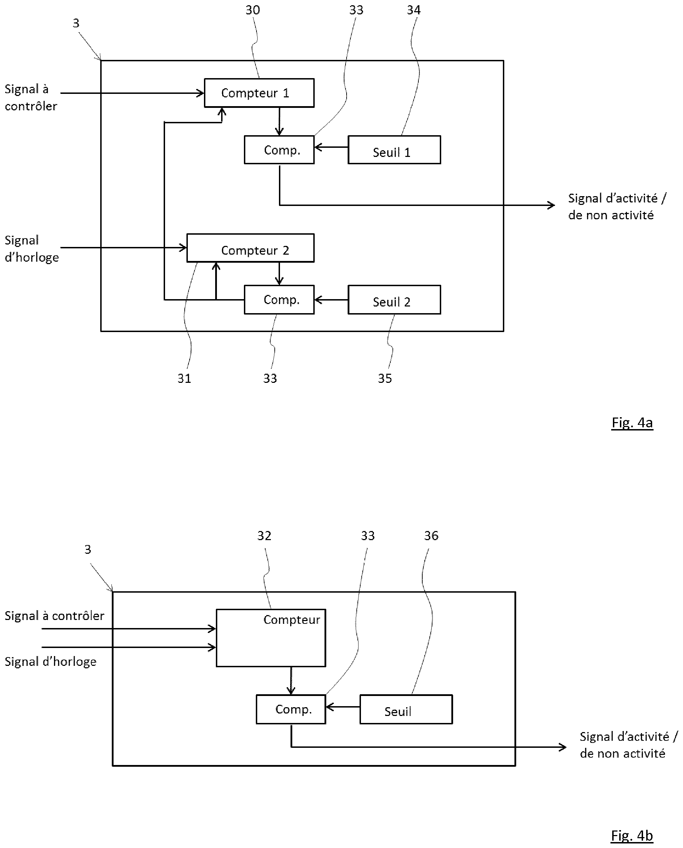

Selon une autre possibilité illustrée à la figure 4b, le circuit de contrôle d'activité 3 comprend au moins un compteur 32 configuré pour compter un nombre de cycles d'horloge sans instruction de branchement exécutée.

Avantageusement, le compteur d'activité 32 peut être configuré pour recevoir le signal à contrôler sur une première entrée et le signal d'horloge sur une deuxième entrée.

Ledit nombre de cycles d'horloge sans instruction de branchement peut être comparé à un seuil 36, par exemple un nombre maximal de cycles d'horloge sans occurrence d'instructions de branchement.

Si le nombre de cycles d'horloge sans instruction de branchement atteint le seuil 36, un signal de non-activité peut être émis par le circuit de contrôle d'activité 3 et un signal de violation de sécurité pourra être déclenché par la suite.

Le signal de non activité peut directement porter une contre-mesure. Par exemple, le signal de non activité peut porter une adresse modifiée à destination d'un autre registre. Le signal de non activité peut donc être directement interprétable par cet autre registre et peut *in fine* modifier un comportement du microprocesseur de sorte à déjouer une attaque.

Si une instruction de branchement est transmise au registre d'instruction 2 et détectée par le circuit de contrôle d'activité 3 avant que le nombre de cycles d'horloge sans instruction de branchement atteigne le seuil 36, un signal d'activité peut être émis par le circuit de contrôle d'activité 3. Le comptage du nombre de cycles d'horloge sans occurrence d'instructions de branchement peut dès lors être réinitialisé 125 ou remis à zéro, de manière à poursuivre le contrôle d'activité sur les instructions de branchement.

Le ou les compteurs d'activité 30, 32 et le ou les compteurs temporels 31 peuvent être intégrés dans le processeur selon différentes architectures connues de l'homme du métier.

Par exemple, le comptage ou l'intégration des occurrences d'instruction de branchement sur un intervalle de temps peut être réalisée par un circuit 300 de type « pompe de charge » présentant par exemple un nombre minimal de transistors.

De manière avantageuse, ce circuit 300 peut être réalisé sous forme d'une cellule standard intégrable dans un coeur numérique.

Les figures 4a, 5a et 6 illustrent différentes réalisations d'un tel circuit 300.

De manière générale, un principe de comptage de ce circuit 300 est de charger une capacité par l'intermédiaire d'un interrupteur piloté par le signal d'horloge ou de synchronisation et de décharger cette capacité lorsqu'une instruction de branchement survient, ladite instruction de branchement ayant été préalablement détectée par sa séquence d'identification selon l'une des possibilités décrites précédemment (détection individuelle, par cumul partiel selon une combinaison particulière, ou par cumul total sur les signaux à contrôler).

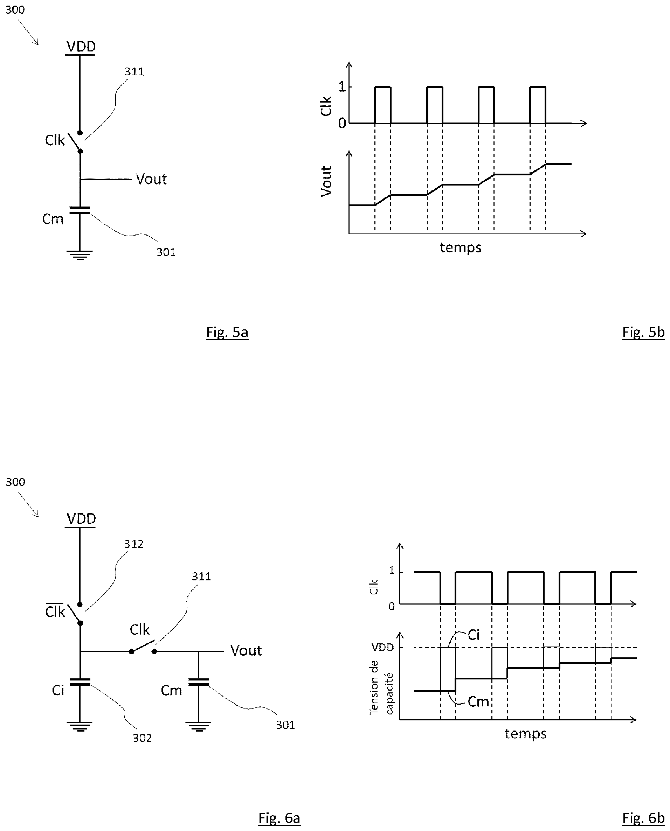

Dans le cas le plus simple (figure 5a), le principe de comptage du circuit 300 comprend le chargement d'une capacité Cm 301 par l'intermédiaire d'un interrupteur Clk 311 piloté par le signal d'horloge.

Cet interrupteur Clk 311 peut être un transistor piloté par le signal d'horloge.

La figure 5b illustre un fonctionnement de ce circuit 300.

En particulier, lorsque le signal d'horloge porte une valeur logique « un », l'interrupteur Clk 311 est fermé et la capacité Cm 301 se charge via une tension d'alimentation VDD du circuit 300. Lorsque le signal d'horloge porte une valeur logique « zéro », l'interrupteur Clk 311 est ouvert et la capacité Cm 301 se décharge au niveau d'une sortie présentant une tension Vout.

Par conséquence, chaque occurrence de valeurs logiques « un » du signal d'horloge incrémente linéairement la tension Vout.

De manière avantageuse, cette tension Vout peut être une mesure du nombre d'occurrence de valeurs logiques « un » portées par le signal d'horloge, autrement dit du nombre de cycles d'horloge (un cycle d'horloge prenant alternativement les valeurs logiques « zéro » et « un »).

La tension Vout croît linéairement à chaque occurrence et peut éventuellement dépasser la tension de seuil de déclenchement de la contre-mesure.

Le pas d'incrémentation de la tension Vout dépend de la valeur de la capacité Cm 301.

De manière à pouvoir compter un nombre de cycles d'horloge significatif avant de franchir le seuil de déclenchement, la valeur de la capacité Cm 301 doit être très petite dans cette configuration.

Comme illustré à la figure 6a, une deuxième capacité Ci 302 et un deuxième interrupteur 312 piloté par le signal d'horloge peuvent être avantageusement ajoutés au circuit 300 tel qu'illustré à la figure 5a, de manière à avoir un contrôle plus précis de la tension de sortie Vout du circuit 300.

Les deux interrupteurs Clk et C̅l̅k̅ 311, 312 fonctionnent de préférence en opposition de phase du signal d'horloge.

La figure 6b illustre un fonctionnement de ce circuit 300.

En particulier, la deuxième capacité Ci 302 se charge lorsque le signal d'horloge porte la valeur logique « zéro » (interrupteur C̅l̅k̅ 312 fermé et interrupteur Clk 311 ouvert).

Lorsque le signal d'horloge porte la valeur logique « un », la capacité Ci 302 se décharge et la capacité Cm 301 se charge, de sorte que leurs charges respectives s'égalisent.

Dans ce cas et de manière avantageuse, la tension Vout augmente proportionnellement à un rapport des charges des capacités Ci 302 et Cm 301.

Ainsi, à chaque occurrence, ledit rapport diminue à mesure que Cm 301 se charge, et Vout croît non linéairement, de manière asymptotique à une tension d'alimentation VDD.

Ce circuit de comptage permet avantageusement de compter un grand nombre de cycles d'horloge.

Par ailleurs, le nombre de cycles d'horloge peut être directement défini par un dimensionnement des capacités Ci 302 et Cm 301.

Dès lors et de manière avantageuse, il est possible de fixer directement le nombre maximal de cycles d'horloge sans instruction de branchement au-delà duquel le signal de non-activité peut être émis par le circuit de contrôle d'activité 3, en dimensionnant lesdites capacités Ci 302 et Cm 301.

Les deux interrupteurs Clk 311 et C̅l̅k̅ 312 peuvent être réalisés par l'intermédiaire de transistors, n et p par exemple, contrôlés par le signal d'horloge.

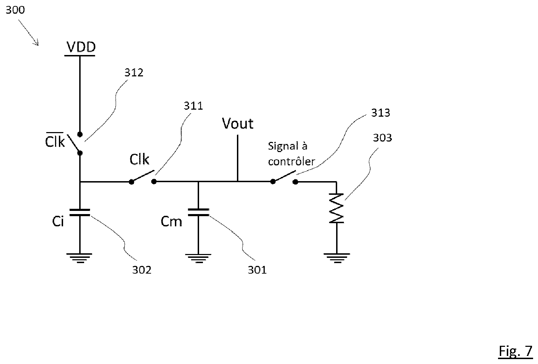

Comme illustré à la figure 7, la capacité Cm 301 peut être avantageusement déchargée dans un élément de décharge 303 lorsqu'une instruction de branchement survient, par l'intermédiaire d'un troisième interrupteur 313 piloté par le signal d'instruction de branchement.

Lors de la décharge, la tension Vout diminue également.

De cette manière, si une instruction de branchement survient avant que le nombre de cycles d'horloge sans instruction de branchement atteigne le nombre maximal de cycles d'horloge sans instruction de branchement, la tension Vout peut reprendre une valeur minimale, et le comptage est avantageusement réinitialisé.

Le troisième interrupteur 313 peut également être un transistor piloté par le signal d'instruction de branchement. L'élément de décharge 303 peut être une simple résistance par exemple.

Un tel circuit 300 de comptage peut être facilement intégré comme une cellule standard dans un microprocesseur. Il présente notamment une surface d'intégration très réduite, une consommation énergétique réduite compatible avec un système embarqué de type carte à puce par exemple, et de manière encore plus avantageuse, un fonctionnement n'affectant pas les performances du microprocesseur.

Le dispositif de détection d'attaque 1 peut en outre être configuré pour déclencher 123 une contre-mesure destinée à dérouter une attaque en cours.

Après détection de l'attaque en cours par la surveillance au niveau du registre 2 de l'activité des signaux à contrôler, selon les différentes possibilités mentionnées plus haut, le signal de violation de sécurité est déclenché.

De manière générale, un tel signal de violation est destiné à altérer significativement le comportement du microprocesseur ou du circuit intégré.

Ce signal peut par exemple faire pointer le registre d'adresse dans une zone morte en dehors de l'espace d'adressage des mémoires du microprocesseur de façon à isoler le registre d'instruction de la mémoire à protéger.

Ce signal peut alternativement ou en combinaison générer 132 un flot aléatoire sur les données pour brouiller des données extraites par extraction de code linéaire.

Afin d'améliorer la contre-mesure, différents signaux de violation de sécurité peuvent être créés, lesdits signaux de violation de sécurité étant à destination de différents composants, tels que des registres, des mémoires, ou des circuits de lecture par exemple dans le circuit intégré.
Un autre aspect de l'invention concerne un dispositif de sécurité microélectronique (non illustré) comprenant au moins un dispositif de détection d'attaque 1 selon l'invention.
Un tel dispositif de sécurité microélectronique peut être par exemple une puce cryptée de carte de paiement, une puce de badge d'identification comprenant des données personnelles, ou plus généralement d'un badge de contrôle d'accès. Un tel dispositif de sécurité microélectronique peut avantageusement être intégré à un passeport ou une carte d'identité biométrique.
L'invention est en outre recommandée dans la protection d'une communication entre un consommable et un système hôte. Ledit consommable peut être un périphérique de console de jeux vidéo (manette par exemple) ou une cartouche d'encre pour imprimante par exemple.

L'invention n'est pas limitée aux modes de réalisation précédemment décrits mais s'étend à tous modes de réalisation entrant dans la portée des revendications annexées.

En particulier, le registre d'instruction modifié 1 peut traiter tous types de signaux dont l'activité peut être détectée et/ou caractérisée. Il est possible notamment d'utiliser le circuit de contrôle d'activité 3 pour surveiller des occurrences d'un signal de lecture, et les comparer à un nombre de cycles d'horloge par exemple.

Un dispositif de détection d'attaque 1 combinant la détection et la surveillance des occurrences des séquences d'identification d'instructions de branchement et des occurrences des signaux de lecture par exemple, peut être une variante plus puissante et efficace que le dispositif de détection d'attaque 1 surveillant les seules occurrences des séquences d'identification d'instructions de branchement par exemple.

Par ailleurs, ces deux détections peuvent être réalisées dans des zones différentes du circuit intégré. Une attaque potentielle aura par conséquent plus de difficultés à désactiver chacun des circuits de contrôle d'activité 3 situés sur des zones
séparées. En outre, pour contourner ou déjouer ce dispositif de détection 1, une attaque nécessitera une complexité de mise en oeuvre supplémentaire. Un tel dispositif de détection 1 et de contre-mesure peut donc avantageusement dissuader un pirate de
tenter une telle attaque contre le circuit intégré.

## Revendications

1. Dispositif de détection d'attaque d'un microprocesseur (1) comprenant au moins un registre d'instructions (2) destiné à stocker au moins temporairement au moins une partie d'instruction de l'une au moins parmi une instruction séquentielle et une instruction de branchement, ledit registre (2) comprenant au moins une pluralité de bascules, chaque bascule (22) étant configurée entre une entrée de données (21) et une sortie de données (23) pour générer, au niveau de la sortie (23) de données associée, un premier signal, chaque premier signal portant au moins une partie d'instruction,
ledit dispositif (1) étant **caractérisé en ce qu'**il comprend en outre au moins un circuit de contrôle d'activité (3), chaque circuit de contrôle d'activité (3) étant associé à au moins une bascule (22) du registre d'instructions (2) et étant configuré pour :
- surveiller (111) un deuxième signal issu d'au moins un premier signal généré par une bascule associée audit circuit de contrôle d'activité (3) et prise parmi ladite au moins une bascule (22), de façon à mesurer (113) un taux d'occurrence d'une partie d'instruction de branchement portée par le deuxième signal et issue dudit au moins un premier signal, et
- générer (122), si le taux d'occurrence mesuré est inférieur à une première valeur seuil prédéterminée, un signal de non activité pour détecter une attaque.

2. Dispositif de détection d'attaque d'un microprocesseur (1) selon la revendication précédente dans lequel chaque circuit de contrôle d'activité (3) est en outre configuré pour générer (124), si le taux d'occurrence mesuré est supérieur à une deuxième valeur seuil prédéterminée, un signal d'activité signifiant qu'aucune attaque n'est détectée.

3. Dispositif de détection d'attaque d'un microprocesseur (1) selon l'une quelconque des revendications précédentes dans lequel la partie d'instruction de branchement comprend une séquence d'identification d'instruction de branchement.

4. Dispositif de détection d'attaque d'un microprocesseur (1) selon l'une quelconque des revendications précédentes dans lequel le circuit de contrôle d'activité (3) comprend un compteur temporel (31) configuré pour compter un nombre de cycles d'horloge à partir d'un signal d'horloge et un compteur d'activité (30) configuré pour compter un nombre d'instruction de branchement à partir du deuxième signal.

5. Dispositif de détection d'attaque d'un microprocesseur (1) selon la revendication 1 ou la revendication 2, dans lequel le circuit de contrôle d'activité (3) comprend un compteur d'activité (32) configuré pour recevoir un signal d'horloge et pour compter un nombre de parties d'instruction de branchement pour un nombre de deuxième signal reçu, ledit nombre de deuxième signal reçu correspondant à un nombre prédéterminé de cycles d'horloge issus du signal d'horloge

6. Dispositif de détection d'attaque d'un microprocesseur (1) selon l'une quelconque des revendications précédentes dans lequel le circuit de contrôle d'activité (3) comprend au moins un module de comparaison (33) configuré, en sortie de l'un au moins parmi un compteur temporel (31) et un compteur d'activité (30, 32), pour comparer le taux d'occurrence mesuré à une valeur seuil (34, 35, 36) prédéterminée.

7. Dispositif de détection d'attaque d'un microprocesseur (1) selon l'une quelconque des revendications précédentes dans lequel le circuit de contrôle d'activité (3) comprend au moins l'un parmi un compteur temporel (31) et un compteur d'activité (30, 32), le circuit de contrôle d'activité (3) étant configuré pour réinitialiser au moins l'un parmi le compteur temporel (31) et le compteur d'activité (32) lorsqu'une partie d'instruction de branchement est détectée.

8. Dispositif de détection d'attaque d'un microprocesseur (1) selon l'une quelconque des revendications précédentes comprenant en outre au moins un circuit logique (4), chaque circuit logique (4) étant associé à au moins deux bascules (22) et étant agencé entre au moins deux sorties de données (23) correspondantes et un circuit de contrôle d'activité (3) également associé auxdites aux moins deux bascules (22) pour recevoir au moins deux premiers signaux, et chaque circuit logique (4) étant configuré pour combiner des parties d'instruction, et notamment des parties d'instruction de branchement, issues d'au moins deux premiers signaux parmi lesdits au moins deux premiers signaux pour générer au moins un deuxième signal, la combinaison d'au moins deux premiers signaux comprenant par exemple une sommation de ces signaux.

9. Dispositif de détection d'attaque d'un microprocesseur (1) selon la revendication 2 et selon l'une quelconque des revendications 3 à 8 comprenant en outre un circuit de décision (5) associé à au moins deux circuits de contrôle d'activité (3) et configuré, en sortie desdits au moins deux circuits de contrôle d'activité (3), pour déterminer, en fonction d'au moins deux signaux parmi les signaux de non-activité ou d'activité générés (122, 124) par lesdits au moins deux circuits de contrôle d'activité (3), une occurrence ou une absence d'attaque.

10. Dispositif de détection d'attaque d'un microprocesseur (1) selon l'une quelconque des revendications précédentes, dans lequel chaque circuit de contrôle d'activité (3) est en outre configuré pour que le signal de non activité généré (122) porte l'une parmi une contre-mesure et une instruction de déclenchement d'une contre-mesure, de manière à parer une attaque détectée, ladite attaque étant par exemple une attaque par extraction de code linéaire.

11. Dispositif de détection d'attaque d'un microprocesseur (1) selon l'une quelconque des revendications précédentes dans lequel le circuit de contrôle d'activité (3) présente une très basse consommation d'énergie.

12. Procédé (100) de détection d'attaque d'un microprocesseur sur au moins un registre d'instructions (2) destiné à stocker au moins temporairement au moins une partie d'instruction de l'une au moins parmi une instruction séquentielle et une instruction de branchement, ledit registre (2) comprenant au moins une pluralité de bascules, chaque bascule (22) étant configurée entre une entrée de données et une sortie de données (21, 23) pour générer, au niveau de la sortie (23) de données associée, un premier signal, chaque premier signal portant au moins une partie d'instruction,
ledit procédé (1) étant **caractérisé en ce qu'**il comprend en outre une séquence d'étapes de détection d'instructions de branchement (110) et une séquence d'étapes de décision d'activité (120) mises en oeuvre par au moins un circuit de contrôle d'activité (3), chaque circuit de contrôle d'activité (3) étant associé à au moins une bascule (22), telles que :
La séquence d'étapes de détection d'instructions de branchement (110) comprend au moins les étapes suivantes :
- surveiller (111) un deuxième signal issu d'au moins un premier signal généré par une bascule associée audit circuit de contrôle d'activité (3) et prise parmi ladite au moins une bascule (22), et
- détecter (112) au moins une partie d'instruction de branchement portée par le deuxième signal et issue dudit au moins un premier signal, et
- mesurer (113) un taux d'occurrence d'une partie d'instruction de branchement portée par le deuxième signal et issue dudit au moins un premier signal.
La séquence d'étapes de décision d'activité (120) comprend au moins les étapes suivantes :
- comparer (121) le taux d'occurrence mesuré à une première valeur seuil prédéterminée, et
- générer (122), si le taux d'occurrence mesuré est inférieur à la première valeur seuil, un signal de non activité pour détecter une attaque.

13. Procédé (100) de détection d'attaque d'un microprocesseur selon la revendication précédente dans lequel la séquence d'étapes de décision d'activité (120) comprend en outre les étapes suivantes :
- générer (124), si le taux d'occurrence mesuré est supérieur à une deuxième valeur seuil prédéterminée, un signal d'activité signifiant qu'aucune attaque n'est détectée,
- après la génération (122) du signal de non activité, déclencher (123) une contre-mesure,
- après la génération (124) du signal d'activité, réinitialiser (125) la mesure du taux d'occurrence.

14. Procédé (100) de détection d'attaque d'un microprocesseur selon la revendication précédente comprenant en outre, après l'étape de décision consistant à déclencher (123) la contre-mesure, au moins une étape de contre-mesure (130) parmi :
- Modifier (131) un contenu d'un registre d'adresse afin d'isoler le registre d'instruction d'une mémoire à protéger
- Générer (132) un flot de données aléatoire pour brouiller des données extraites par extraction de code linéaire.
- Altérer le fonctionnement du circuit de façon à le rendre inexploitable.

15. Dispositif de sécurité microélectronique comprenant au moins un dispositif de détection d'attaque d'un microprocesseur (1) selon l'une quelconque des revendications 1 à 11.
